Europäisches Patentamt

European Patent Office

Office européen des brevets

(11) Publication number: **0 331 276**
**A2**

# EUROPEAN PATENT APPLICATION

(21) Application number: 89300098.4

(22) Date of filing: 06.01.89

(51) Int. Cl.⁴: **C08K 5/00 , G02B 1/04**

(30) Priority: 07.01.88 JP 668/88

(43) Date of publication of application:
06.09.89 Bulletin 89/36

(84) Designated Contracting States:
**DE FR GB**

(71) Applicant: **NIPPON STEEL CHEMICAL CO. LTD.**
**13-16 Ginza 5-chome Chuo-ku**
**Tokyo 104(JP)**

(72) Inventor: **Chinen, Eitatsu**
**12-25, Nakamachi 5-chome**
**Houya-shi Tokyo(JP)**
Inventor: **Daishi, Fumio**
**4-8 Kamishinjo 1-chome Nakahara-ku**
**Kawasaki-shi Kanagawa(JP)**

(74) Representative: **Holmes, Michael John et al**
**Frank B. Dehn & Co. European Patent**
**Attorneys Imperial House 15-19 Kingsway**
**London, WC2B 6UZ,(GB)**

(54) Resin compositions for moulding black shielding materials.

(57) Resin compositions for moulding black shielding materials of substantially black appearance, which when used as a black shielding casing or cover for electrical equipment prevent visibility of the interior, but shine red when a pilot lamp is on by virtue of transmission of visible light substantially only in the wavelength range 700 to 780 nm.

EP 0 331 276 A2

EP 0 331 276 A2

## Resin Compositions For Moulding Black Shielding Materials

This invention relates to resin compositions for moulding black shielding materials and more particularly to resin compositions for moulding black shielding materials which are substantially black in appearance and which, when in use as a casing or cover for electrical equipment, are capable of preventing visibility of the interior but transmit red light substantially in the wavelength range 700 to 780 nm.

Black casings made of synthetic resins are often preferred for television, video, and audio equipment for designing and aesthetic reasons, and sections of such equipment which house pilot lamps and the covers around them are made opaque to prevent visibility of the interior in order to maintain a uniform appearance with only those portions which are positioned directly in front of the pilot lamps being made transparent.

One practice known in the manufacture of such casings and covers is to colour the resins black to prevent visibility of the interior, mould the black resins into casings and covers, make cuts and windows at predetermined locations, and fit properly formed pieces of transparent resin or glass in such cuts and windows.

This practice requires a complex step of making cuts and windows and fitting in pieces of different materials. As it is nearly impossible to attain complete alignment in such a fitting operation, the practice has marred appearance and cused problems attributable to differences between the casings and the inserts, for example, in properties such as thermal expansion coefficient and in the selection of adhesives. This situation has created a strong demand for solutions to these problems.

Optical filters which transmit only light rays of specific wavelength or the so-called band pass filters are known and those formulated from transparent synthetic resins and specific dyes are disclosed, for example, in U.S. Patent No. 3,279,938, Japan Kokai Tokkyo Koho Nos. 31, 638-1972 and 9,642-1979, and Japan Tokkyo Koho No. 18,576-1986. Such optical filters are designed, however, to transmit only near infrared light useful for remote control devices and substantially shut out error-inducing visible light. Consequently, the use of such optical filters in the casings and covers in question would find it still necessary to make cuts and windows and fit in transparent resin or glass inserts, thus leaving the problems unsolved.

It is, therefore, an object of this invention to provide resin compositions for moulding black shielding materials which are substantially black in appearance and which when in use are capable of preventing visibility of the shielded enclosure and transmit substantially only visible light of a specified wavelength range.

More particularly, it is an object of this invention to provide resin compositions for moulding black shielding materials which, when employed for example as a casing or covering for electrical equipment, are capable of preventing visibility of the interior and at the same time permit confirmation from the outside of whether a pilot lamp is on or not.

According to one aspect of this invention, there is provided a resin composition for moulding a black shielding material of substantially black appearance, characterized in that it comprises a mixture of one or more synthetic resins of good light transmission and a plurality of dyes, which can be formed into a black shielding material of for example at least 1mm thickness having an L value of 15 or less and an $(a^2 + b^2)^{1/2}$ value of 25 or less according to the lab colour system, and showing an average light transmission in the wavelength range 700 to 780 nm of at least 35%.

The values L, a, and b in the aforesaid lab colour system are measured in accordance with the reflection method specified in Japanese Industrial Standard (JIS) Z 8730 using as the testing apparatus for example Model 1001DP manufactured by Nippon Denshoku Kogyo Co., Ltd. with a white plate of L = 96.4, a = -0.5, and b = 0.0 as a specimen holder, while the average light transmission of visible light in the wavelength range 700 to 780 nm is obtained by averaging the light transmission at 700 nm ( $\alpha\%$ ) and that at 780 nm ( $\beta\%$ ) or as ( $\alpha + \beta$ )/2.

The synthetic resins of good light transmission to be used in this invention may be any of the transparent resins such as general purpose polystyrene, acrylonitrile-styrene copolymers, poly(methyl methacrylate), styrene-methyl methacrylate copolymers, polycarbonates, poly(vinyl chloride), polyethylene, polyesters, polypropylene and poly (vinyl butyral), or a mixture of two or more of such resins as long as the mixture is transparent.

The dyes to be mixed with the aforesaid synthetic resins of good light transmission may be any mixture of dyes which absorbs visible light and when combined with the chosen synthetic resin(s) in a black shielding material of e.g. 1-3 mm thickness, controls L at 15 or less and $(a^2 + b^2)^{1/2}$ at 25 or less according to the lab colour system while permitting an average light transmission of 35% or more in the wavelength range 700 to 780 nm. For this purpose, preferably one or more green dyes showing excellent light

2

transmission in the wavelength range 700 to 780 nm are admixed with one or more red dyes also showing excellent light transmission in the wavelength range 700 to 780 nm and besides absorbing visible light in the wavelength range of 700 nm or less to which the chosen green dye component is transparent until the specified values of L, a, and b of the lab colour system are reached. If necessary, one or more other coloured dyes, e.g. selected from yellow dyes, orange dyes, blue dyes and violet dyes, may be included in the dye mixture for finer adjustment of absorption of visible light in the wavelength range of 700 nm or less to attain the target values of L, a and b of the lab colour system.

The green dyes to be used for the aforesaid purpose may be any of the green dyes which tranmit extremely well visible light in the wavelength range 700 to 780 nm, for example, green azo dyes, green anthraquinone dyes and green perylene dyes. Preferred examples include oil-soluble green anthraquinone dyes such as Solvent Green 3, Solvent Green 20, Solvent Green 26 and Solvent Green 28, all four in Class 10, Structural Classification, List of Existing Chemical Substances. The red dye(s) to be used with the chosen green dye(s) may be any of the red dyes which transmit extremely well visible light in the wavelength range 700 to 780 nm and absorb efficiently visible light at certain wavelengths in the range of 700 nm or less to which the green dye(s) is/are transparent, for example red azo dyes, red anthraquinone dyes and red perylene dyes.

Preferred examples include oil-soluble red anthraquinone and red perylene dyes such as Solvent Red 146, Solvent Red 152, Solvent Red 155, Solvent Red 158 and Pigment Red 249, all five in Class 10, Structural Classification, List of Existing Chemical Substances. Furthermore, where a dye of another colour, e.g. a yellow, orange, blue or violet dye, is to be used in admixture with green and red dyes, this may be any such dye which transmits extremely well visible light in the wavelength range 700 to 780 nm and absorbs efficiently visible light at certain wavelengths in the range of 700 nm or less to which the selected green and red dyes are transparent, for example azo dyes, anthraquinone dyes and perylene dyes. Preferred examples include oil-soluble anthraquinone and perylene dyes such as Solvent Yellow 114, Solvent Yellow 117, Solvent Orange 64, Solvent Orange 67, Solvent Orange 78, Solvent Blue 83, Solvent Violet 31 and Solvent Violet 34, all eight in Class 10, Structural Classification, List of Existing Chemical Substances.

The mixing ratio of the dyes in the aforesaid dye mixtures is determined by the light transmission characteristics of each dye and unless the transmission of visible light outside the wavelength range 700 to 780 nm is zero, one of green, red, blue, violet and others may form the key colour component. It is desirable to have this as close to black as possible from the view point of imparting a black appearance to the shielding material. The dyes are chosen accordingly so as to permit formation of a black shielding material of conventional thickness in which L is controlled at 15 or less and $(a^2 + b^2)^{1/2}$ at 25 or less according to the lab colour system.

The proportion of the dye mixture combined with the chosen synthetic resin(s) varies with the light transmission characteristics of the said mixture and the thickness of the black shielding material after moulding; it is normally 0.01 to 1.0 part by weight, preferably 0.1 to 0.5 part by weight, per 100 parts of the resin.

The resin compositions of this invention can be moulded into black shielding materials which show L of 15 or less, preferably 12 or less, and $(a^2 + b^2)^{1/2}$ of 25 or less, preferably 10 or less, according to the lab colour system as determined by the reflection method and an average light transmission of 35% or more, preferably 40% or more, in the wavelength range 700 to 780 nm. If the values of L and $(a^2 + b^2)^{1/2}$ according to the lab colour system, said values representing the degree of blackness, exceed 15 and 25 respectively, the colours in the wavelength range of 700 nm or less show up markedly, weakening the visual impression of the materials being substantially black. On the other hand, if the average transmission of visible light in the wavelength range of from 700 to 780 nm falls below 35%, it becomes difficult to discern clearly the burning of pilot lamps or other light sources from the outside unless they emit a large quantity of light in the wavelength range of from 700 to 780 nm.

The resin compositions of this invention can be prepared from the aforesaid synthetic resins and the dye mixtures by any of the prior art methods; for example, by kneading the dye mixture into the synthetic resins during moulding of the black shielding materials or by kneading the synthetic resins and the dye mixtures and forming into pellets suitable for moulding the desired black shielding materials.

Furthermore, compositions of this invention may be mixed, as needed, with such additives as stabilizers, internal lubricants, antistatic agents and flame retardants, as long as the addition does not significantly affect the light transmission in the wavelength range of from 700 to 780 nm.

The resin compositions for moulding black shielding materials of this invention can be used to make casings and covers for television, video, and audio equipment and those compositions which transmit not only visible light in the wavelength range of from 700 to 780 nm but also near infrared light in the wavelength range of from 800 to 2,500 nm can be used for moulding light-receiving windows for remote control devices or for moulding casings and covers with built-in light-receiving windows.

Black shielding materials of this invention, by virtue of exhibiting L of 15 or less and $(a^2 + b^2)^{1/2}$ of 25 or less according to the lab colour system and an average light transmission of 35% or more in the wavelength range 700 to 780 nm appear substantially black but can be illuminated red by light sources which emit visible light in the wavelength range 700 to 780 nm, for example, tungsten lamps emitting white light or LEDs emitting red light.

Brief Description of the Drawings

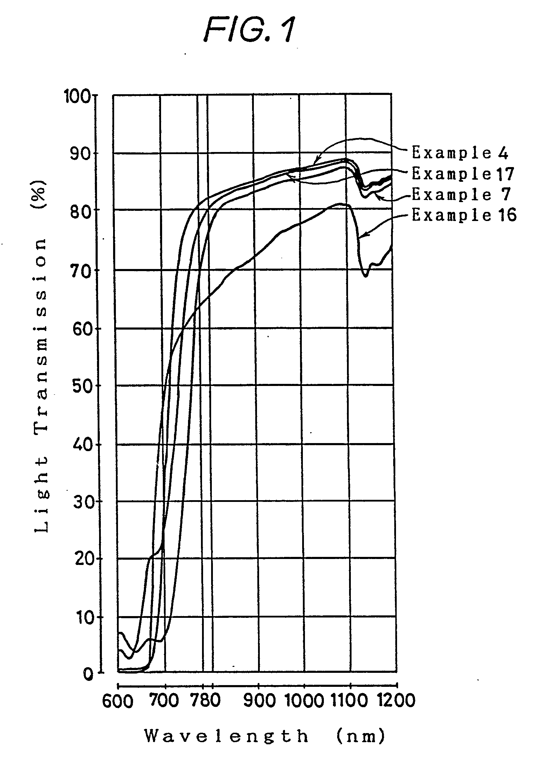

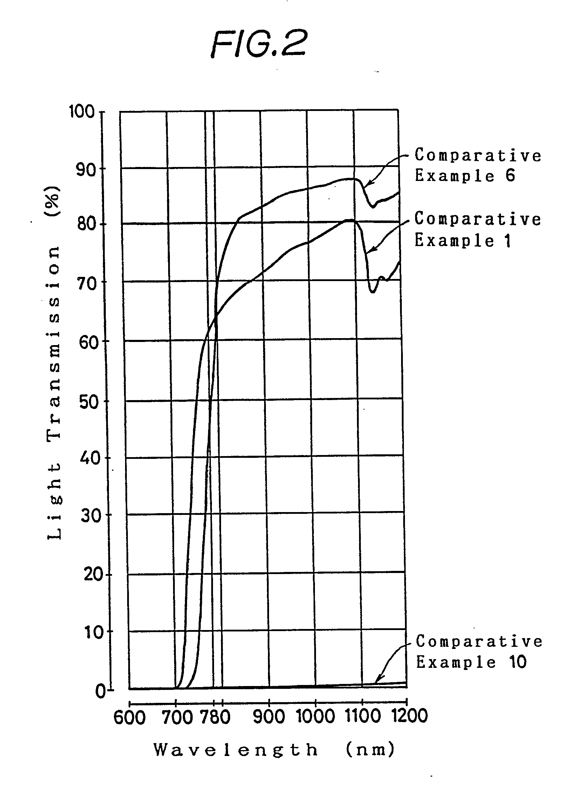

Figure 1 is a chart showing the transmission of light in the wavelength range 600 to 1,200 nm by test specimens prepared according to examples set out below and Figure 2 shows a similar chart for test specimens of comparative examples.

This invention is further illustrated by the following examples.

Examples 1-23 and Comparative Examples 1-16

Preprations of Dye Mixtures

The following dye mixtures were prepared for mixing with a synthetic resin of good light tranmission.

Dye Mixture A-1:

Prepared by mixing Solvent Green 3 (hereinafter referred to as G-1, available from Mitsui Toatsu Dyestuffs, Inc. under the trademark of Mitsui PS Green B), Solvent Red 155 (R-1, Mitsui PS Red BB form Mitsui Toatsu Dyestuffs, Inc.), Solvent Yellow 114 (Y-1, Mitsui PS Yellow GG from Mitsui Toatsu Dyestuffs, Inc.) and Solvent Orange 64 (0-1, Mitsui PS Orange GG from Mitsui Toatsu Dyestuffs, Inc.) at a ratio of G-1 : R-1 : Y-1 : 0-1 = 1 : 1 : 1: 1.

Dye Mixture A-2:

Prepared by mixing the components of Dye Mixture A-1 at a ratio of G-1 : R-1 : Y-1 : 0-1 = 1 : 1 : 3 : 5.

Dye Mixture B-1:

Prepared by mixing Kayaset Green A-G (G-2, from Nippon Kayaku Co., Ltd., Color Index Number unregistered), Pigment Red 249 (R-2, Kayaset Red E-BG from Nippon Kayaku Co., Ltd.), Solvent Yellow 117 (Y-2, Kayaset Yellow E-G from Nippon Kayaku Co., Ltd.), Solvent Orange 67 (0-2, Kayaset Orange A-N from Nippon Kayaku Co., Ltd.), and Kayaset Blue A-CR (B-2, from Nippon Kayaku Co., Ltd., Color Index Number unregistered) at a ratio of G-2 : R-2 : Y-2 : 0-2 : B-2 = 1 : 1 : 1 : 1 : 1

Dye Mixture B-2:

Prepared by mixing the components of Dye Mixture B-1 at a ratio of G-2 : R-2 : Y-2 : 0-2: B-2 = 1 : 1 : 3 : 2 : 3.

Dye Mixture C:

4

Containing only carbon black.

Dye Mixture D:

Prepared by mixing the dyes Y-2, 0-2, R-2 and B-2 at a ratio of 1 : 1 : 3 : 5.

Dye Mixture E:

Prepared by mixing Dye Mixture D and Solvent Green 28 (G-3, Macro-lex Green G from Bayer AG) at a ratio of 9 : 1.

Dye Mixture F:

Prepared by mixing Dye Mixture D and G-3 at a ratio of 8 : 2.

Dye Mixture G:

Prepared by mixing Dye Mixture D and G-3 at a ratio of 7 : 3.

Each of the above-mentioned dye mixtures was mixed with general purpose polystyrene at the ratio shown in Table 1, kneaded in an extruder and pelletized to prepare the resin compositions of Examples 1-20 and Comparative Examples 1-16. Likewise, 0.1g of Dye Mixture A-2 was mixed with 1 kg of Delpet 80N (trademark PMMA manufactured by Ashai Chemical Industry Co., Ltd) to prepare the resin compositions of Examples 21-23.

The pellets of the examples and comparative examples were injection-moulded into test specimens with a thickness of 1, 2, or 3mm. For each specimen, the total light transmission, the average light transmission in the wavelength range of from 700 and 780 nm and also L and $Y = (a^2 + b^2)^{1/2}$ were determined. The results are shown in Table 1.

As is apparent from Table 1, the test specimens of all the examples were nearly black in appearance and were observed to shine bright deep red when lighted by a white pilot lamp from the rear.

Figures 1 and 2 show light transmission of the test specimens of Example 4, 7, 16 and 17 and Comparative Examples 6 and 10 measured in the wavelength range of from 600 to 1,200 nm.

Table 1

| | Kind of Resin | Dye Mixture | | Thickness of Test Specimen (mm) | 700-780nm Average Light Transmission (%) | Lab Color System | | | |
|---|---|---|---|---|---|---|---|---|---|
| | | Kind | Amount Added (*2) | | | L | a | b | Y (*3) |
| Example 1 | GP(*1) | A-1 | 0.1 | 1 | 63 | 12.4 | 3.2 | 3.2 | 4.5 |
| " 2 | " | " | " | 2 | 50 | 11.1 | -0.8 | 1.7 | 1.9 |
| " 3 | " | " | " | 3 | 42 | 11.1 | -0.8 | 1.7 | 1.9 |
| " 4 | " | A-2 | " | 1 | 55 | 11.1 | -0.8 | 1.7 | 1.9 |
| " 5 | " | " | " | 2 | 43 | 11.1 | -5.4 | 1.7 | 5.7 |
| " 6 | " | " | " | 3 | 38 | 11.1 | -5.4 | 1.7 | 5.7 |
| " 7 | " | " | 0.3 | 1 | 42 | 11.1 | -5.4 | 1.7 | 5.7 |
| " 8 | " | " | " | 2 | 35 | 11.1 | -5.4 | 1.7 | 5.7 |
| Comparative Example 1 | " | " | " | 3 | 31 | 11.1 | -5.4 | 1.7 | 5.7 |
| Example 9 | " | B-1 | 0.1 | 1 | 39 | 13.6 | -4.7 | 4.5 | 6.5 |
| Comparative Example 2 | " | " | " | 2 | 29 | 11.1 | -5.4 | 1.7 | 5.7 |
| " 3 | " | " | " | 3 | 24 | 9.6 | -0.7 | -0.2 | 0.7 |
| Example 10 | " | B-2 | " | 1 | 36 | 12.4 | -5.0 | 1.4 | 5.2 |
| Comparative Example 4 | " | " | " | 2 | 27 | 11.1 | -5.4 | 1.7 | 5.7 |
| " 5 | " | " | " | 3 | 22 | 9.6 | -6.0 | -0.2 | 6.0 |
| " 6 | " | " | 0.3 | 1 | 24 | 9.6 | -6.0 | -0.2 | 6.0 |
| " 7 | " | " | " | 2 | 14 | 11.1 | -0.1 | 1.7 | 1.7 |
| " 8 | " | " | " | 3 | 8 | 9.6 | -6.0 | -0.2 | 6.0 |
| " 9 | " | C | 0.1 | 1 | 1 | 11.1 | -5.4 | -0.2 | 5.4 |
| " 10 | " | " | " | 2 | 0 | 11.1 | -10.1 | -0.2 | 10.1 |
| " 11 | " | " | " | 3 | 0 | 11.1 | -10.1 | -0.2 | 10.1 |
| Example 11 | " | D | " | 1 | 78 | 14.7 | 24.1 | 3.8 | 24.4 |
| " 12 | " | " | " | 2 | 70 | 13.6 | 14.2 | 2.9 | 14.5 |
| " 13 | " | " | " | 3 | 61 | 12.4 | 11.6 | 1.4 | 11.7 |
| " 14 | " | " | 0.3 | 1 | 75 | 12.4 | 19.9 | 3.2 | 20.2 |
| " 15 | " | " | " | 2 | 65 | 12.4 | 7.4 | 3.2 | 8.1 |
| " 16 | " | " | " | 3 | 56 | 11.1 | 3.8 | 1.7 | 4.2 |
| " 17 | " | E | 0.1 | 1 | 52 | 12.4 | -0.9 | 1.4 | 1.7 |
| " 18 | " | " | " | 2 | 38 | 11.1 | -5.4 | -0.2 | 5.4 |
| Comparative Example 12 | " | " | " | 3 | 30 | 11.1 | -10.1 | 1.7 | 10.2 |
| Example 19 | " | F | " | 1 | 40 | 12.4 | -9.2 | 1.4 | 9.3 |
| Comparative Example 13 | " | " | " | 2 | 31 | 9.6 | -6.0 | -0.2 | 6.0 |
| " 14 | " | " | " | 3 | 26 | 11.1 | -10.1 | 1.7 | 10.2 |
| Example 20 | " | G | " | 1 | 36 | 12.4 | -9.2 | 1.4 | 9.3 |
| Comparative Example 15 | " | " | " | 2 | 28 | 11.1 | -10.1 | 1.7 | 10.2 |
| " 16 | " | " | " | 3 | 23 | 11.1 | -10.1 | 1.7 | 10.2 |
| Example 21 | PHMA | A-2 | " | 1 | 74 | 11.1 | -0.8 | 3.7 | 3.8 |
| " 22 | " | " | " | 2 | 62 | 11.1 | -5.4 | 3.7 | 6.5 |
| " 23 | " | " | " | 3 | 56 | 9.6 | -0.7 | 2.0 | 2.1 |

(Note) *1: General purpose polystyrene.  *2: Expressed in parts by weight of the dye mixture per 100 parts by weight of the resin.  *3: $Y = ( a^2 + b^2 )^{1/2}$.

**Claims**

1. A resin composition for moulding a black shielding material of substantially black appearance, characterized in that it comprises a mixture of one or more synthetic resins of good light transmission and a plurality of dyes which can be formed into a black shielding material having an L value of 15 or less and an $(a^2 + b^2)^{1/2}$ value of 25 or less according to the lab colour system, and showing an average light transmission in the wavelength range 700 to 780 mn of at least 35%.

2. A resin composition according to claim 1, characterised in that the said plurality of dyes comprises (a) one or more green dyes which transmit visible light in the wavelength range 700 to 780 nm and (b) one or more red dyes which transmit visible light in the wavelength range 700 to 780 nm and absorb visible light at certain wavelengths in the range 700 nm or less to which the green dye component (a) is transparent.

3. A resin composition according to claim 2, characterised in that the said dye component (a) is selected from oil-soluble green anthraquinone dyes.

4. A resin composition according to claim 2 or claim 3, characterised in that the said dye component (b) is selected from red oil-soluble anthraquinone and perylene dyes.

5. A resin composition according to any one of claims 2 to 4, characterised in that the said plurality of dyes additionally includes at least one dye of other than red or green colour which transmits visible light in the wavelength range 700 to 780 nm and absorbs visible light at certain wavelengths in the range 700 nm or less to which the said dye components (a) and (b) are transparent.

6. A resin composition according to claim 5, characterised in that the said plurality of dyes includes at least one dye selected from oil-soluble anthraquinone and perylene dyes of yellow, orange, blue or violet colour.

7. A moulded black shielding material of substantially black appearance, characterised in that it is formed from a resin composition as claimed in any one of claims 1 to 6, has an L value of 15 or less and an $(a^2 + b^2)^{1/2}$ value of 25 or less according to the lab colour system, and shows an average light transmission in the wavelength range 700 to 780 nm of at least 35%.

8. A black shielding casing or covering of substantially black appearance for electrical equipment, characterised in that it is formed from a resin composition as claimed in any one of claims 1 to 6, has an L value of 15 or less and an $(a^2 + b^2)^{1/2}$ value of 25 or less according to the lab colour system, and shows an average light transmission in the wavelength range 700 to 780 nm of at least 35%.

## FIG. 1

Light Transmission (%) vs Wavelength (nm)

Example 4
Example 17
Example 7
Example 16

# FIG.2